# EUROPEAN PATENT APPLICATION

(11) **EP 4 131 110 A1**
(43) Date of publication of application: **08.02.2023**
(21) Application number: 22188570.0
(22) Date of filing: 03.08.2022
(51) Int. Cl.: G06Q 20/32, G06Q 20/38, G06Q 20/40, G06Q 20/42

(54) **METHOD AND APPARATUS FOR SUPPORTING TRANSACTIONS OF PRODUCTS**

(30) Priority: 05.08.2021 KR 20210102909; 27.08.2021 KR 20210113925; 29.10.2021 KR 20210147191
(71) Applicant: Samsung SDS Co., Ltd., Songpa-gu, Seoul (KR)
(72) Inventor: Park, Hyun Chul, Seoul (KR); Park, Hee Jin, Seoul (KR)
(74) Representative: Glawe, Delfs, Moll

(57) **Abstract**

Methods and apparatuses for supporting transactions of products are provided. One of the methods comprises, receiving, by a second terminal, information of a seller that is selling the products, from a first terminal, requesting, by the second terminal, verification of the seller's information from a server, in response to successful verification of the seller's information, acquiring, by the second terminal, a transaction identifier for the products from the server, measuring, by the second terminal, a distance from the first terminal creating, by the second terminal, transaction data including the measured distance and the transaction identifier, requesting, by the second terminal, verification of the transaction data from the server and in response to receiving a message indicating successful verification of the transaction data from the server, performing, by the second terminal, a payment routine for the products.

## Description

### CROSS-REFERENCE TO RELATED APPLICATION AND CLAIM OF PRIORITY

This application claims priority from Korean Patent Application Nos. 10-2021-0102909 filed on August 05, 2021, 10-2021-0113925 filed on August 27, 2021 and 10-2021-0147191 filed on October 29, 2021 in the Korean Intellectual Property Office, and all the benefits accruing therefrom under 35 U.S.C. 119, the contents of which in their entirety are herein incorporated by reference.

### BACKGROUND

### 1. Technical Field

The present disclosure relates to a method and apparatus for supporting transactions of products. More particularly, the present disclosure relates to a method and apparatus for supporting transactions of products to verify the transactions of products based on a distance between a purchaser and a seller.

### 2. Description of the Related Art

A variety of payment methods are used in addition to a payment method using a real credit card. For example, a payment method using quick response (QR) code scanning and payment methods through local area communication such as magnetic secure transmission (MST) or near-field communication (NFC) are being used.

However, payment methods using QR code scanning are inconvenient because a user needs to scan a QR code with a camera. Furthermore, payment methods via QR code scanning have the inconvenience of causing the purchaser to directly enter a purchase amount.

In addition, MST- and NFC-based payment methods require close contact between terminals, which results in unnecessary contact activities that the purchaser needs to deliver his or her terminal to the seller for transaction authentication. In addition, some sellers with malicious intent may attempt to hack the purchaser's terminal when performing MST- or NFC-based payments.

Therefore, there is a need for a convenient payment method with enhanced security.

### SUMMARY

Technical aspects to be achieved through one embodiment by the present disclosure provide a method and apparatus for supporting transactions of products that can easily transact the products without face-to-face contact.

Other technical aspects to be achieved through one embodiment by the present disclosure also provides a method and apparatus for supporting transactions of products that can block external hacking during a data exchange step between terminals.

Another technical aspect to be achieved through one embodiment by the present disclosure provides a method and apparatus for supporting transactions of products that can prevent deception from occurring in a transaction process by authenticating a purchaser and a seller of the products.

Still another technical aspect to be achieved through one embodiment by the present disclosure provides a method and apparatus for supporting transactions of products that enable a transaction to be completed when a seller and a purchaser are disposed within a predetermined distance.

The technical aspects of the present disclosure are not restricted to those set forth herein, and other unmentioned technical aspects will be clearly understood by one of ordinary skill in the art to which the present disclosure pertains by referencing the detailed description of the present disclosure given below.

According to the present disclosure, a method for supporting transactions of products performed by a computing device is provided. The method comprises, receiving, by a second terminal, information of a seller that is selling the products, from a first terminal, requesting, by the second terminal, verification of the seller's information from a server, in response to successful verification of the seller's information, acquiring, by the second terminal, a transaction identifier for the products from the server, measuring, by the second terminal, a distance from the first terminal, creating, by the second terminal, transaction data including the measured distance and the transaction identifier, requesting, by the second terminal, verification of the transaction data from the server, and in response to receiving a message indicating successful verification of the transaction data from the server, performing, by the second terminal, a payment routine for the products.

In some embodiments, the creating of transaction data may comprise, performing, by the second terminal, user authentication in response to the measured distance being within a threshold distance and creating, by the second terminal, the transaction data in response to successful user authentication.

In some embodiments, the performing of a payment routine for the products may comprise, in response to a distance included in the transaction data being within the threshold distance and the transaction identifier included in the transaction data being consistent with a pre-stored transaction identifier, receiving a message indicating the success verification of the transaction data from the server.

In some embodiments, the receiving of the seller's information from a first terminal may comprise, forming, by the second terminal, a first wireless communication channel with the first terminal and receiving, by the second terminal, the seller's information via the first wireless communication channel, and wherein the measuring of a distance from the first terminal comprises, forming, by the second terminal, a second wireless communication channel with the first terminal; and measuring, by the second terminal, the distance from the first terminal based on a wireless signal via the second wireless communication channel.

In some embodiments, the first wireless communication channel and the second wireless communication channel may use different wireless protocols.

In some embodiments, the forming of a second wireless communication channel may comprise, forming the second wireless communication channel used to transmit or receive encrypted data based on the transaction identifier.

In some embodiments, the forming of a first wireless communication channel with the first terminal may comprise, in response to the products or the seller being selected, forming, by the second terminal, the first wireless communication channel with the first terminal, and wherein the forming of a second wireless communication channel with the first terminal comprises, in response to the transaction identifier being acquired from the server, forming the second wireless communication channel with the first terminal.

In some embodiments, the seller's information including an electronic signature created based on a first token assigned to the first terminal and a private key of the first terminal, and wherein the requesting of verification of the seller's information from the server may comprise, requesting verification of the electronic signature from the server.

In some embodiments, the method for supporting transactions of products may comprises, prior to creating the transaction data, acquiring, by the second terminal, a second token assigned to the second terminal, wherein the creating of transaction data may comprises, creating, by the second terminal, the transaction data further including the second token and encrypting the created transaction data with the private key of the second terminal, and wherein the requesting of verification of the transaction data from the server comprises, requesting verification of the encrypted transaction data from the server.

In some embodiments, the method for supporting transactions of products may comprises, prior to acquiring a transaction identifier for the products from the server, transmitting, by the second terminal, a user registration request to the server and in response to successful user registration, assigning the second token to the second terminal.

In some embodiments, the acquiring of the transaction identifier from the server may comprises, in response to the successful verification of the seller's information, receiving, by the second terminal, the second token from the server.

In some embodiments, the performing of a payment routine for the products may comprises, receiving, by the second terminal, a third token issued by a credit card server from the server and transmitting, by the second terminal, the third token and payment information to a payment gateway (PG) or a value-added network (VAN) server.

According to another aspect of the present disclosure, a method for supporting transactions of products may comprises, transmitting, by a first terminal, information on the products on sale to a second terminal, requesting, by the first terminal, a purchase request for the products from the second terminal, forming, by the first terminal, a wireless channel for measuring a distance with the second terminal, receiving, by the first terminal, a second token assigned to the second terminal from the second terminal and creating, by the first terminal, transaction data including a distance between the first terminal and the second terminal measured via a signal of the wireless channel, and the second token and requesting, by the first terminal, verification of the transaction data from the server, wherein a payment routine is advanced as the verification of the transaction data is successful.

According to another aspect of the present disclosure, a computing device may comprises, one or more processors, a memory configured to load a computer program executed by the processor and a storage configured to store the computer program, wherein the computer program comprises instructions for performing operations of receiving information of a seller that is selling products from a first terminal, requesting verification of the seller's information from a server, in response to successful verification of the seller's information, acquiring a transaction identifier for the products from the server, measuring a distance from the first terminal, creating transaction data including the measured distance and the transaction identifier, requesting verification of the transaction data from the server and in response to receiving a message indicating successful verification of the transaction data from the server, performing a payment routine for the products.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a view illustrating a system for supporting transactions of products according to one embodiment of the present disclosure;
FIG. 2 is a signal flowchart explaining a method for registering a user according to the other embodiment of the present disclosure;
FIG. 3 is a signal flowchart explaining a method for verifying a seller's information according to another embodiment of the present disclosure;
FIGS. 4A and 4B are signal flowcharts explaining a method for verifying transaction data according to another embodiment of the present disclosure;
FIG. 5 is a view illustrating a user interface displayed on a terminal of a purchaser;
FIGS. 6 and 7 are signal flowcharts explaining a payment routine performed when transaction data is successfully verified; and
FIG. 8 is an exemplary view illustrating a hardware configuration that can implement a computing device in a variety of embodiments of the present disclosure.

### DETAILED DESCRIPTION OF THE EMBODIMENTS

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings:

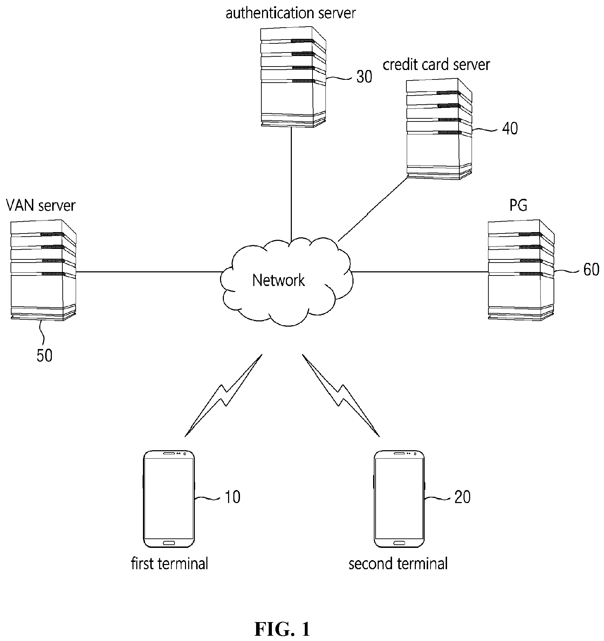

FIG. 1 is a view illustrating a system for supporting transactions of products according to one embodiment of the present disclosure.

As shown in FIG. 1, a service cost calculation system according to the present embodiment may include an authentication server 30, a credit card server 40, a value-added network (VAN) server 50, a payment gateway (PG) 60, a first terminal 10, and a second terminal 20.

The credit card server 40 may be a server managed by a credit card company. The credit card server 40 may authenticate whether the credit card requested for payment is available. In addition, the credit card server 40 may issue a payment token for credit card payment. The payment token may be a one-time token, and may be created whenever a payment is requested. The credit card server 40 may process the payment of a purchase amount by interlocking one or more of the authentication server 30, the VAN server 50, and the PG 60.

The VAN server 50 may be a payment relay server for relaying a payment between an affiliated store and the credit card server 40. The VAN server 50 may perform a routine for processing the payment of a purchase amount by interlocking one or more of the PG 60 and the credit card server 40.

The PG 60 may be a device that acts as the payment of a financial institution (e.g., a credit card company server). The PG 60 may perform a routine for paying a purchase amount by interlocking one or more of the credit card server 40 and the VAN server 50. The PG 60 may handle online payments generated in an online shopping mall and the like.

When the transactions of the products are performed between the first terminal 10 and the second terminal 20, the authentication server 30 may be a computing device configured to authenticate a user and verify transaction data. The authentication server 30 may store the information of subscribers that have joined as members. The subscriber information may include a username, an email address, a user address, and a phone number. The authentication server 30 may create a transaction identifier based on the transactions of the products, and may verify the transaction data received from the first terminal 10 or the second terminal 20.

The first terminal 10 and the second terminal 20 can be in wireless communication with each other. The first terminal 10 may be a terminal possessed by the seller, and the second terminal 20 may be a terminal possessed by the purchaser. The first terminal 10 may be a point of sale (POS) terminal installed in a store, or may be a communication device capable of mobile communication such as a smartphone. The second terminal 20 may be a communication device capable of communicating while moving.

Each of the first terminal 10 and the second terminal 20 may include a plurality of communication modules configured to support different protocols. For example, each of the first terminal 10 and the second terminal 20 may include two or more communication modules among a Bluetooth communication module, a Wi-Fi communication module, and an ultra-wideband (UWB) communication module.

The first terminal 10 may transmit the seller's information and a list of products on sale to the second terminal 20, and the second terminal 20 may purchase any one of the lists of products.

The first terminal 10 and the second terminal 20 may exchange data with each other to create transaction data necessary for a transaction, and request verification of the created transaction data from the authentication server 30. In response to the successful verification of the transaction data by the authentication server 30, at least one of the first terminal 10 and the second terminal 20 may perform the routine for product payment.

In one embodiment, the first terminal 10 and the second terminal 20 may form a wireless channel for measuring a distance, and a distance between the first terminal 10 and the second terminal 20 may be measured based on a signal created via the wireless channel. The first terminal 10 or the second terminal 20 may transmit the transaction data including the measured distance to the authentication server 30.

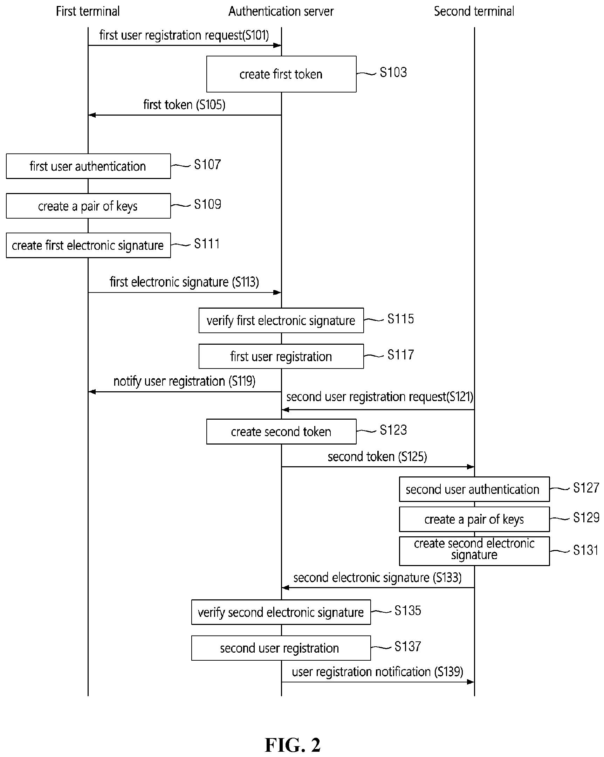

Hereinafter, a method for supporting transactions of the products according to one embodiment of the present invention will be described with reference to FIGS. 2 to 7.

First, referring to FIG. 2, a method of registering the seller and the purchaser in the authentication server 30 will be described.

In embodiments to be described below, it will be assumed that the first user is a seller and the second user is a purchaser.

In step S101, the first terminal 10 may transmit a first user registration request including an identifier (e.g., login ID) of the first user to the authentication server 30. In one embodiment, when receiving the first user registration request, the authentication server 30 may receive and store seller information including seller names, business names, locations and an identifier of the first terminal 10, from the first terminal 10.

In addition, in a step S103, the authentication server 30 may create a first token for assignment to the first terminal 10. In one embodiment, the authentication server 30 may create the first token using a current date and time, an identifier of the first user and a random key, and may allow the first token to correspond to the identifier of the first user and store the same. The first token may be used later to verify the transaction data or verify the seller information.

In a step S105, the authentication server 30 may transmit the created first token to the first terminal 10.

In a step S107, the first terminal 10 may request authentication information from the first user to perform first user authentication. The first terminal 10 may authenticate the first user by receiving biometric information (e.g., a fingerprint, a face image, etc.) or a password from the first user and determining whether the biometric information or password is consistent with the pre-stored biometric information or password. When the first user authentication fails, the first terminal 10 may display a message requesting re-inputting authentication information of the first user.

A step S109 advances in response to the successful authentication of the first user, and the first terminal 10 may create a first private key and a first public key.

In a step Sill, the first terminal 10 may create a first electronic signature based on the first private key and the first token. In one embodiment, the first terminal 10 may use one or more of the identifier of the first terminal, the identifier of the first user, and the first token as original data, and may create the first electronic signature based on the original data and the first private key. In some embodiments, the first terminal 10 may encrypt the original data with the first private key and create the first electronic signature including the encrypted original data.

In a step S113, the first terminal 10 may transmit the first electronic signature and the first public key to the authentication server 30.

In a step S115, the authentication server 30 may verify the authenticity of the first electronic signature using the first public key. In one embodiment, the authentication server 30 may decrypt the original data included in the first electronic signature using the first public key, and determine whether one or more of the identifier of the first terminal, the identifier of the first user, and the first token, which constitute the original data, is consistent with an identifier or token received and stored from the first terminal 10, thereby verifying the first electronic signature.

As a step S117 advances in response to the successful verification of the first electronic signature, the authentication server 30 may assign the first token to the first terminal 10 to register the first user. In one embodiment, the authentication server 30 may store the identifier of the first user, the identifier of the first terminal 10, the first token, and the first public key in association with each other.

In a step S119, the authentication server 30 may transmit to the first terminal 10 a user registration notification message notifying that user registration is completed.

Through the aforementioned steps S101 to S119, the seller may be registered in the authentication server 30.

In a step S121, the second terminal 20 may transmit a second user registration request including an identifier (e.g., ID) of the second user to the authentication server 30. In one embodiment, when receiving a registration request of the second user, the authentication server 30 may receive and store seller information including a name of the second user, an address of the second user, an identifier of the second user, and an identifier of the second terminal 20. Herein, the identifier of the second terminal may be an identifier that a local area communication module of the second terminal 20 has.

In addition, in a step S123, the authentication server 30 may create a second token for assignment to the second terminal 20. In one embodiment, the authentication server 30 may create the second token using the current date and time, the identifier of the second user and a random key, and may store the second token in association with the second user identifier.

In a step S125, the authentication server 30 may transmit the created second token to the second terminal 20.

In a step S127, the second terminal 20 may request authentication information from the second user to perform a second user authentication. The second terminal 20 may authenticate the second user by receiving biometric information (e.g., a fingerprint, a face image, etc.) or a password from the second user and determining whether the biometric information or password is consistent with the pre-stored biometric information or password. When the authentication of the second user fails, the second terminal 20 may display a message requesting re-inputting the authentication information of the second user.

A step S129 advances in response to the successful authentication of the second user, and the second terminal 20 may create a second private key and a second public key.

In a step S131, the second terminal 20 may create a second electronic signature based on the second private key and the second token. In one embodiment, the second terminal 20 may use one or more of the identifier of the second terminal, the identifier of the second user, and the second token as original data, and may create a second electronic signature based on the original data and the second private key. In some embodiments, the second terminal 20 may encrypt the original data using the second private key and create the second electronic signature including the encrypted original data.

In a step S133, the second terminal 20 may transmit the second electronic signature and the second public key to the authentication server 30.

In a step S135, the authentication server 30 may verify the authenticity of the second electronic signature using the second public key and the original data. In one embodiment, the authentication server 30 may verify the second electronic signature by decrypting the original data included in the second electronic signature using the second public key and determining whether one or more of the identifier of the second terminal, the identifier of the second user, and the second token, which constitute the original data, is consistent with an identifier or a token received and stored from the second terminal 20.

A step S137 advances in response to the successful verification of the second electronic signature, and the authentication server 30 may assign the second token to the second terminal 20 to register the second user. In one embodiment, the authentication server 30 may store the identifier of the second user, the identifier of the second terminal 20, the second token, and a second public key in association with each other.

In a step S139, the authentication server 30 may transmit to the second terminal 20 a user registration notification message notifying that the user registration is completed.

Through the aforementioned steps S131 to S139, the purchaser may be registered in the authentication server 30.

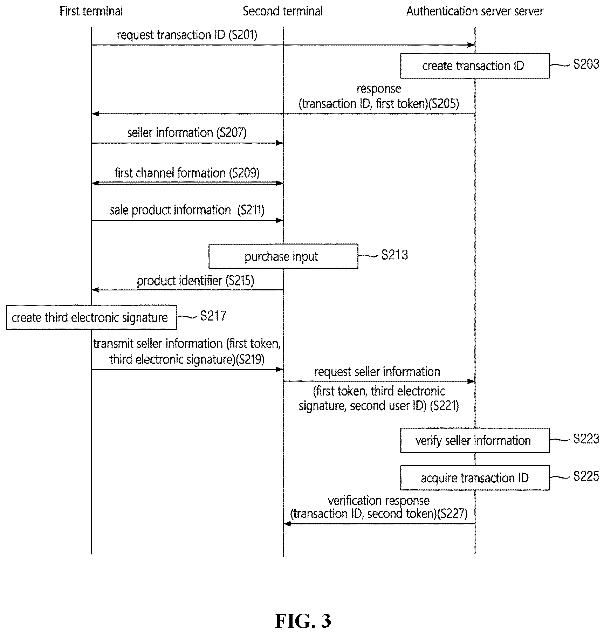

A method of verifying a transaction between a first user (for example, a seller) and a second user (for example, a purchaser) will be described with reference to FIGS. 3 to 4B.

In a step S201, the first terminal 10 may transmit a transaction identifier (i.e., transaction ID) request to the authentication server 30 after successful login by accessing the authentication server 30. In one embodiment, the first terminal 10 may transmit product information including product names, product prices, and the like to the authentication server 30. In some embodiments, when a plurality of products are on sale, the first terminal 10 may request the transaction identifiers for each of the products from the authentication server 30.

In a step S203, the authentication server 30 may create the transaction identifier and store the created transaction identifier in association with seller information (i.e., a first user information) and product information. As described above with reference to FIG. 2, in one embodiment, when registering the first user, the authentication server 30 may receive the seller information including seller names, business names and addresses from the first terminal 10 and pre-store the information. In some embodiments, when the transaction identifier for the plurality of products is requested, the authentication server 30 may create the transaction identifiers for each of the products.

In a step S205, the authentication server 30 may acquire the first token associated with the identifier of the first user, and transmit a response message including the first token and the transaction identifier to the first terminal 10. As described above, the first token may be created and stored by the authentication server 30 during the registration step of the first user.

In a step S207, the first terminal 10 may broadcast the seller information including business names, location information, and the like. In one embodiment, the first terminal 10 may broadcast the seller information using the wireless communication module.

The second terminal 20 may display a plurality of received seller information, and when selecting the seller information transmitted from the first terminal 10 from the plurality of received seller information, a step S209 may advance for the second terminal 20 to form a first channel with the first terminal 10. In one embodiment, the second terminal 20 may request the first terminal 10 to form a first channel and form the first channel with the first terminal 10. In one embodiment, the first channel may be a wireless communication-based channel. In some embodiments, the first channel may be a local area wireless communication-based channel such as Bluetooth or Wi-Fi.

When the first channel is formed, a step S211 advances, and the first terminal 10 may transmit sale product information including product names, product prices, and the like to the second terminal 20 via the first channel.

In the step S209, the second terminal 20 may display the sale product information including one or more products. Accordingly, the second user may recognize products on sale in a corresponding store. In another embodiment, the second terminal 20 may broadcast a product information request including the identifier of the second user. In this case, in response to a product information request received from the second terminal 20, the first terminal 10 may transmit the sale product information including names and prices of the product on sale, seller information, and the like, to the second terminal 20.

In a step S213, the second terminal 20 may receive purchase input information for any one product included in the sale product information from the second user (i.e., a purchaser). That is, the second user may input information in which the purchaser desires to purchase any one of the products included in the sale information.

In response to receiving product purchase information from the second user, in a step S215, the second terminal 20 may transmit an identifier of a product selected to purchase to the first terminal 10 via the first channel.

In a step S217, the first terminal 10 may create a third electronic signature using the first token assigned to the first terminal 10 and the first private key of the first terminal 10. In one embodiment, the first terminal 10 may set the first token as original data to create the third electronic signature. That is, the first terminal 10 may encrypt the first token using the first private key and create the third electronic signature including the encrypted first token.

In a step S219, the first terminal 10 may transmit the product information selected by the second user and seller information including the third electronic signature and the first token to the second terminal 20. In one embodiment, the seller information may be transmitted to the second terminal 20 via the first channel.

In a step S221, in response to receiving the seller information, the second terminal 20 may transmit a verification request for the seller information to the authentication server 30. In one embodiment, the second terminal 20 may include the first token, the third electronic signature, the identifier of the second user, and the product information in the verification request.

In a step S223, the authentication server 30 may verify the seller information received from the second terminal 20. In one embodiment, the authentication server 30 may verify the seller information by acquiring the first public key of the first terminal associated with the first token and verifying the authenticity of the third electronic signature using the first public key and the first token. In some embodiments, the authentication server 30 may verify the authenticity of the third electronic signature by decrypting the encrypted first token included in the third electronic signature using the first public key and determining whether the decrypted first token is consistent with the first token included in the verification request.

In response to failure of the seller information, the authentication server 30 may transmit a verification failure message for the seller information to the second terminal 20, and the second terminal 20 may stop the product transactions according to the failure to verify the seller information.

On the other hand, as a step S225 advances in response to the successful verification of the seller information, the authentication server 30 may acquire the second token associated with a second user identifier from pre-stored second user information and acquire the transaction identifier that corresponds to product information and the second token from a list of pre-stored transaction identifiers.

In step S227, the authentication server 30 may transmit a verification response message including the acquired transaction identifier and the second token to the second terminal 20, and the second terminal 20 may acquire the transaction identifier as the verification of the seller information succeeds.

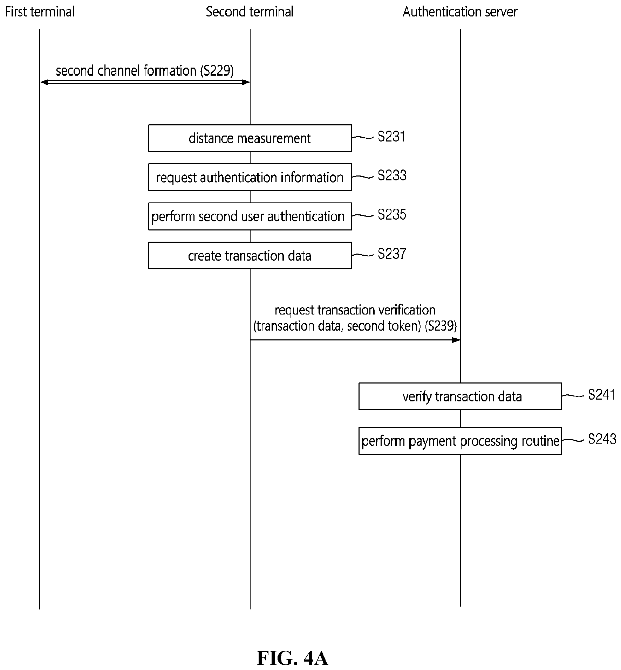

As a step S229 of FIG.4A advances in response to acquiring the transaction identifier, the second terminal 20 may form a second channel between the first terminals 10. In one embodiment, when acquiring the transaction identifier, the second terminal 20 may request the first terminal 10 to form the second channel and form the second channel with the first terminal 10. In one embodiment, the second channel may be a wireless communication-based channel to which a protocol different from that of the first channel is applied. In some embodiments, the second channel may be a UWB-based wireless communication channel. In one embodiment, the second channel may be created using the transaction identifier. In one embodiment, the encrypted data may be transmitted or received via the second channel by using the transaction identifier as an encryption key.

In a step S231, the second terminal 20 may measure a distance from the first terminal 10 using the second channel. In one embodiment, the second terminal 20 may measure a delay time of a wireless signal transmitted from the first terminal 10 via the second channel, and measure the distance from the first terminal 10 based on the delay time and known speed of the wireless signal. In another embodiment, the second terminal 20 may measure intensity of the wireless signal transmitted from the first terminal 10 via the second channel, and measure the distance from the first terminal 10 based on the intensity of the wireless signal.

In steps S233 and S235, the second terminal 20 may request authentication information from the second user to perform second user authentication. In one embodiment, the second terminal 20 may display a message requesting the authentication information of the second user when the measured distance (i.e., a distance from the first terminal) is within a threshold distance. The second terminal 20 may authenticate the second user by receiving the biometric information (e.g., a fingerprint, a face image, etc.) or the password from the second user and determining whether the biometric information or password is consistent with a pre-stored biometric information or password.

A step S237 advances in response to successful authentication of the second user, and the second terminal 20 may encrypt, with a private key of the second terminal 20, one or more of the second token, the measured distance from the first terminal 10, the transaction identifier, and information of products to be traded, thus creating the transaction data. Herein, the information on the products to be traded may include a product identifier and a sale price of products, and may further include a seller identifier (i.e., a first user identifier) and purchaser information (a second user identifier).

In a step S239, the second terminal 20 may transmit the verification request including the encrypted transaction data to the authentication server 30. In one embodiment, the second terminal 20 may include the second token or the identifier of the second user in the verification request of the transaction data. In some embodiments, the second terminal 200 may create the electronic signature including the encrypted transaction data and request the verification of the electronic signature to the authentication server 30.

In a step S241, the authentication server 30 may acquire the second public key of the second terminal 20 stored in association with the second token or the second user identifier, may decrypt the encrypted transaction data using the second public key, and may then verify the decrypted transaction data. In one embodiment, the authentication server 30 may perform a first verification on whether the transaction data is accurate by comparing the transaction identifier, the product information, and the second token included in the transaction data with pre-stored data. In addition, the authentication server 30 may perform a second verification of the transaction data by determining whether the distance included in the transaction data is within a preset threshold distance. When the distance exceeds the threshold distance, the authentication server 30 may fail to verify the transaction data, and when the distance is less than or equal to the threshold distance, the authentication server 30 may successfully verify the transaction data.

As a step S243 advances in response to the successful verification of the transaction data, the authentication server 30 may perform a payment processing routine by interlocking one or more of the second terminal 20, the first terminal 10, the VAN server 50, and the PG 60.

According to the present embodiment, data necessary for a transaction may be transmitted and received via a communication channel without contact between the first terminal 10 and the second terminal 20. In addition, according to the present embodiment, the distance between the first terminal 10 and the second terminal 20 may be included in the transaction data, and the distance may act as a main factor for verification of the transaction data, thereby accurately detecting undue transactions. In other words, when the distance between the first terminal 10 and the second terminal 20 exceeds the threshold distance, the transaction occurring in the first terminal 10 and the second terminal 20 may be regarded and handled as an unallowed transaction.

So far, in the embodiment described above with reference to FIG. 4A, the second terminal creates the transaction data, but in some other embodiments, the first terminal may create the transaction data.

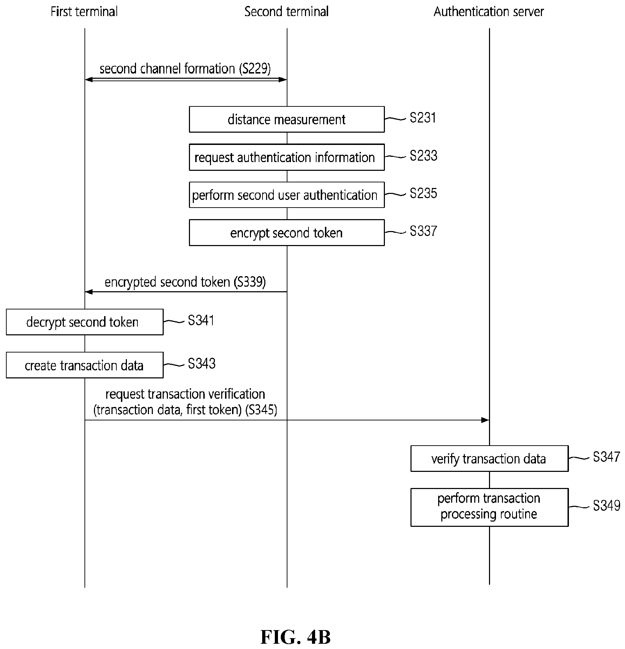

FIG. 4B is a signal flowchart explaining a method for creating transaction data by the first terminal. In the description with reference to FIG. 4B, a step having the same reference numeral as those of FIG. 4A is the same as the corresponding step described with reference to FIG. 4A, and accordingly, a portion different from that of FIG. 4A will be described in the description with reference to FIG. 4B.

As a step S337 advances in response to the successful authentication of the second user, the second terminal 20 may acquire the distance from the first terminal 10 and encrypt the distance between the second token and the first terminal 10 by using the transaction identifier as an encryption key. Herein, the transaction identifier may be an identifier received from the authentication server 30 in the step S227.

In a step S339, the second terminal 20 may transmit a distance from the encrypted second token to the first terminal 10 via the second channel.

In a step S341, the first terminal 10 may decrypt the distance from the encrypted second token by using the transaction identifier as a decryption key. Herein, the transaction identifier may be an identifier received from the authentication server 30 in the step S205 of FIG. 3. The transaction identifier may be used as a symmetric key to encrypt and decrypt the distance from the second token. In some embodiments, instead of receiving the distance from the first terminal 10, the first terminal 10 may measure the distance from the second terminal 20 based on the wireless signal transmitted from the second terminal 20 via the second channel formed with the second terminal 20.

In a step S343, the first terminal 10 may create the transaction data including one or more of the decrypted second token, information on products to be traded, the distance between the first terminal 10 and the second terminal 20, and the transaction identifier, and encrypt the transaction data using the private key of the first terminal 10.

In a step S345, the first terminal 10 may transmit a verification request of the transaction data to the authentication server 30. In one embodiment, the second terminal 20 may include the first token or the identifier of the first user in the verification request of the transaction data.

In a step S347, the authentication server 30 may acquire the first public key of the first terminal 10 that was pre-stored in association with the first token or the first user identifier, may decrypt the encrypted transaction data using the first public key, and may then verify the decrypted transaction data. In one embodiment, the authentication server 30 may perform the first verification on whether the transaction identifier, the product information, and the second token included in the transaction data are consistent with the pre-stored data. Furthermore, the authentication server 30 may perform the second verification of the transaction data by determining whether the distance included in the transaction data is within a preset threshold distance. When the distance exceeds the threshold distance, the authentication server 30 may fail to verify the transaction data, and when the distance is less than or equal to the threshold distance, the authentication server 30 may successfully verify the transaction data.

As a step S349 advances in response to the successful verification of the transaction data, the authentication server 30 may perform a payment processing routine by interlocking one or more of the second terminal 20, the first terminal 10, the VAN server 50, and the PG 60.

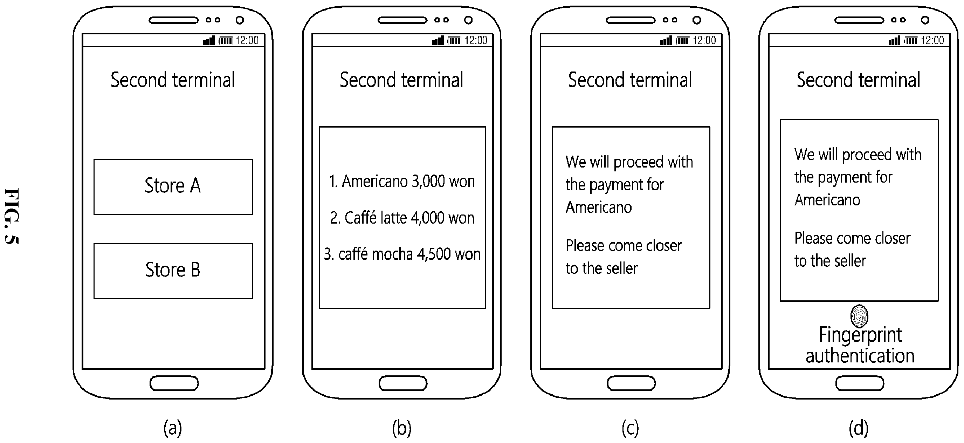

FIG. 5 illustrates a user interface displayed on a terminal of a purchaser (i.e., a second terminal).

Referring to FIG. 5, when different sale information is received from a plurality of seller terminals, the second terminal 20 may display the seller information as illustrated in the image (a) of FIG. 5. In addition, the second terminal 20 may display a plurality of products sold in "store A" when selection information on "store A" is input among the plurality of seller information. When the second user inputs a purchase for any one of the displayed products, in the image (c) of FIG. 5, the second terminal 20 may display a message requesting an approach from the seller. Furthermore, when the distance between the first terminals 10 is within the threshold distance, the second terminal 20 may display a message requesting authentication information of the user in order to create the transaction data, and may receive the authentication information from the user. When the authentication information is successfully authenticated, the second terminal 20 may create the transaction data and transmit the transaction data to the authentication server 30.

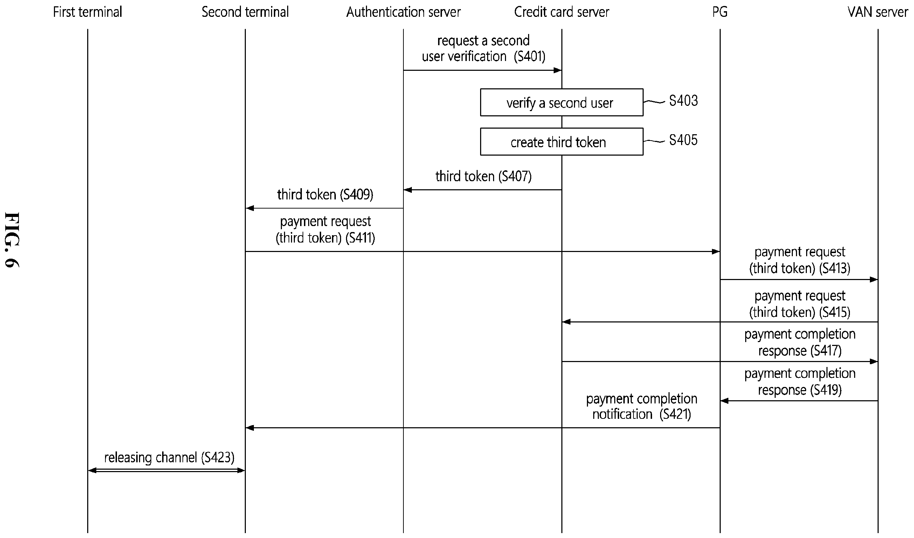

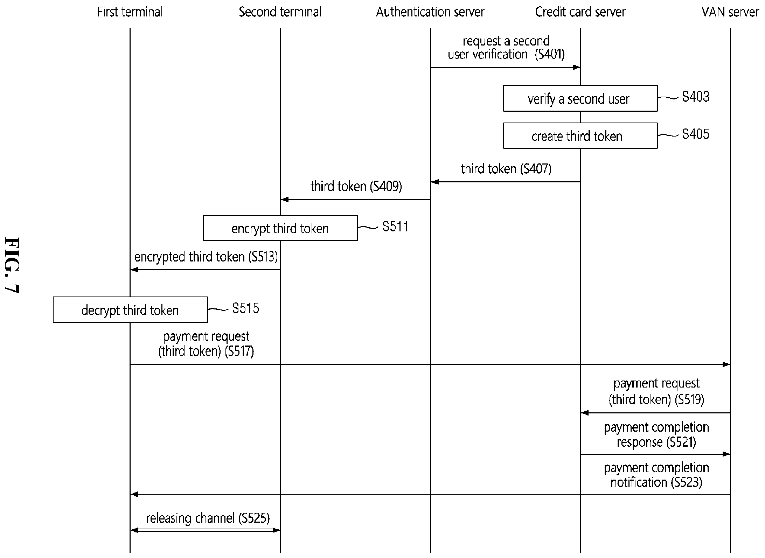

Hereinafter, referring to FIGS. 6 and 7, a payment routine performed when transaction data is successfully verified will be described.

FIGS. 6 and 7 are signal flowcharts explaining a payment routine performed when transaction data is successful; and

First, referring to FIG. 6, a method of processing a payment for a product purchase by interlocking the credit card server, the PG 60, and the VAN server 50 will be described. The method for processing a payment according to FIG. 6 may be a routine processed at the time of using an online market.

As a S401 advances in response to the successful verification of the transaction data, and the authentication server 30 may transmit the verification request of the second user (i.e., a purchaser) to the credit card server 40. In one embodiment, the authentication server 30 may transmit information on the second user, such as a date of birth, a name, and a mobile phone number, to the credit card server 40 and may request the verification of the second user.

In a step S403, the credit card server 40 may verify the second user by determining whether the information of the second user received from the authentication server 30 is accurate.

As a step S405 advances in response to the successful verification of the second user, a third token for credit card payment may be created.

In a step S407, the credit card server 40 may transmit the third token to the authentication server 30, and in a step S409, the authentication server 30 may transmit the received third token to the second terminal 20.

In a step S411, the second terminal 20 may transmit a payment request including the third token and credit card information to the PG 60, and in a step S413, the PG 60 may transmit the received payment request to the VAN server 50. Since the credit card information is payment information for the payment of products, it may include a serial number of a credit card, an expiration date thereof, and the like.

In a step S415, the VAN server 50 may transmit the payment request to the credit card server 40.

The credit card server 40 may perform the first verification on whether the third token included in the received payment request is a token issued to the second user, and may perform the second verification on whether the payment information (i.e., credit card information) included in the payment request is accurate.

In a step S417, when both the first and the second verification are completed, the credit card server 40 may transmit a payment completion response message to the VAN server 50 indicating that the payment has been successfully processed.

When the payment completion response message is received, in a step S419, the VAN server 50 may transmit the payment completion response message to the PG 60, and in a step S421, the PG 60 may transmit a payment completion notification message to the second terminal 20 notifying that the payment is normally completed.

In a step S423, since the payment is completed normally, the products have been purchased, and the second terminal 20 may release one or more of the first channel and the second channel formed with the first terminal 10.

Referring to FIG. 7, a method according to another embodiment of processing a payment for a product purchase by interlocking the credit card server and the VAN server 50 will be described. The method for processing the payment according to FIG. 7 may be used in a routine in which the product payment is processed by interlocking a point of sale (POS) terminal of an offline store.

In the description with reference to FIG. 7, the step of having the same reference numerals as those of FIG. 6 is the same as the description of FIG. 6, and thus only the step of having different reference numerals from those of FIG. 6 will be described.

In a step S511, the second terminal 20 may encrypt the third token and the credit card information. In one embodiment, the second terminal 20 may encrypt the third token and the credit card information by using the transaction identifier of the products that are being purchased as an encryption key.

In a step S513, the second terminal 20 may transmit the encrypted third token and credit card information to the first terminal 10. In one embodiment, the second terminal 20 may transmit the encrypted third token and credit card information to the first terminal 10 via the second channel.

In a step S515, the first terminal 10 may decrypt the encrypted third token and credit card information. In one embodiment, the first terminal 10 may decrypt the third token and the credit card information by using the transaction identifier of the products that are being purchased as a decoding key.

In a step S517, the first terminal 10 may transmit a payment request including the decrypted third token and credit card information to the VAN server 50. Since the credit card information is payment information for the payment of products, it may include a serial number of a credit card, an expiration date thereof, and the like.

In a step S519, the VAN server 50 may transmit the payment request to the credit card server 40.

The credit card server 40 may perform the first verification on whether the third token included in the received payment request is a token issued to the second user, and may perform the second verification on whether the credit card information included in the payment request is accurate.

In a step S521, when both the first and second verifications are completed, the credit card server 40 may transmit a payment completion response message to the VAN server 50 indicating that the payment has been successfully processed.

When the payment completion response message is received, in a step S523, the VAN server 50 may transmit a payment completion notification message to the first terminal 10 notifying that the payment is normally completed.

In a step S525, since the payment is normally completed in step S525, the products have been purchased, and the first terminal 10 may release one or more of the first channel and the second channel formed with the second terminal 20.

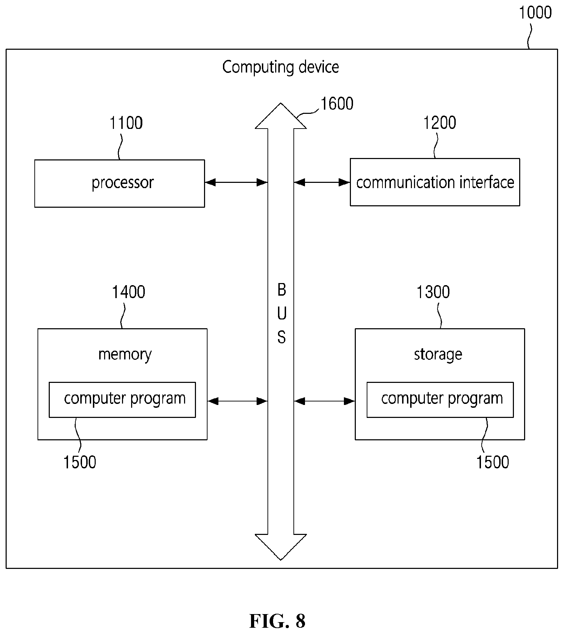

FIG. 8 is an example hardware diagram illustrating a computing device 1000. As shown in FIG. 8, the computing device 1000 may include one or more processors 1100, a bus 1600, a communication interface 1200, a memory 1400, which loads a computer program 1500 executed by the processors 1100, and a storage 1300 for storing the computer program 1500. However, FIG. 8 illustrates only the components related to the embodiment of the present disclosure. Therefore, it will be appreciated by those skilled in the art that the present disclosure may further include other general purpose components in addition to the components shown in FIG. 8.

The processor 1100 controls overall operations of each component of the computing device 1000. The processor 1100 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 1100 may perform calculations on at least one application or program for executing a method/operation according to various embodiments of the present disclosure. The computing device 1000 may have one or more processors.

The memory 1400 stores various data, instructions and/or information. The memory 1400 may load one or more programs 1500 from the storage 1300 to execute methods/operations according to various embodiments of the present disclosure. An example of the memory 1400 may be a RAM, but is not limited thereto.

The bus 1600 provides communication between components of the computing device 1000. The bus 1600 may be implemented as various types of bus such as an address bus, a data bus and a control bus.

The communication interface 1200 supports wired and wireless internet communication of the computing device 1000. The communication interface 1200 may support various communication methods other than internet communication. To this end, the communication interface 1200 may be configured to comprise a communication module well known in the art of the present disclosure.

The storage 1300 can non-temporarily store one or more computer programs 1500. The storage 1300 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

The computer program 1500 may include one or more instructions, on which the methods/operations according to various embodiments of the present disclosure are implemented. For example, the computer program 1500 may include instructions for executing operations comprising receiving, by a second terminal, information of a seller that is selling the products, from a first terminal, requesting, by the second terminal, verification of the seller's information from a server, in response to successful verification of the seller's information, acquiring, by the second terminal, a transaction identifier for the products from the server, measuring, by the second terminal, a distance from the first terminal, creating, by the second terminal, transaction data including the measured distance and the transaction identifier, requesting, by the second terminal, verification of the transaction data from the server and in response to receiving a message indicating successful verification of the transaction data from the server, performing, by the second terminal, a payment routine for the products. When the computer program 1500 is loaded on the memory 1400, the processor 1100 may perform the methods/operations in accordance with various embodiments of the present disclosure by executing the one or more instructions.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method for supporting a transaction of a product performed by a computing device, the method comprising:
receiving, by a second terminal, information of a seller that is selling the product, from a first terminal;
requesting, by the second terminal, verification of the seller's information from a server;
in response to successful verification of the seller's information, acquiring, by the second terminal, a transaction identifier for the product from the server;
measuring, by the second terminal, a distance from the first terminal;
creating, by the second terminal, transaction data including the measured distance and the transaction identifier;
requesting, by the second terminal, verification of the transaction data from the server;
receiving, by the second terminal, a message indicating successful verification of the transaction data from the server if the transaction data is verified by the server;
in response to the receiving of the message, performing, by the second terminal, a payment routine for the product.

2. The method of claim 1, wherein the creating of the transaction data comprises:
determining whether the measured distance is within a preset threshold distance;
performing, by the second terminal, user authentication in response to the measured distance being within the preset threshold distance; and
creating, by the second terminal, the transaction data in response to successful user authentication.

3. The method of claim 1, wherein the receiving of the message comprises:
in response to the measured distance included in the transaction data being within the preset threshold distance and the transaction identifier included in the transaction data being consistent with a pre-stored transaction identifier, receiving the message indicating the success verification of the transaction data from the server.

4. The method of claim 1, wherein receiving of the seller's information from the first terminal comprises:
forming, by the second terminal, a first wireless communication channel with the first terminal; and
receiving, by the second terminal, the seller's information via the first wireless communication channel, and
wherein the measuring of the distance from the first terminal comprises:
forming, by the second terminal, a second wireless communication channel with the first terminal; and
measuring, by the second terminal, the distance from the first terminal based on a wireless signal via the second wireless communication channel.

5. The method of claim 4, wherein the first wireless communication channel and the second wireless communication channel use different wireless protocols.

6. The method of claim 4, wherein the forming of the second wireless communication channel comprises:
forming the second wireless communication channel to transmit or receive encrypted data based on the transaction identifier.

7. The method of claim 4, wherein the forming of the first wireless communication channel with the first terminal comprises:
in response to a selection of the product or the seller, forming, by the second terminal, the first wireless communication channel with the first terminal, and
wherein the forming of the second wireless communication channel with the first terminal comprises:
in response to the transaction identifier being acquired from the server, forming the second wireless communication channel with the first terminal.

8. The method of claim 1, wherein the seller's information includes an electronic signature created based on a first token assigned to the first terminal and a private key of the first terminal, and
wherein the requesting of the verification of the seller's information from the server comprises:
requesting verification of the electronic signature from the server.

9. The method of claim 1, further comprising, prior to creating the transaction data, acquiring, by the second terminal, a second token assigned to the second terminal,
wherein the creating of the transaction data comprises:
creating, by the second terminal, the transaction data further including the second token; and
encrypting the created transaction data with the private key of the second terminal, and
wherein the requesting of the verification of the transaction data from the server comprises:
requesting verification of the encrypted transaction data from the server.

10. The method of claim 9, further comprising:
prior to acquiring a transaction identifier for the product from the server, transmitting, by the second terminal, a user registration request to the server; and
in response to successful user registration, assigning the second token to the second terminal.

11. The method of claim 9, wherein the acquiring of the transaction identifier from the server comprises:
in response to the successful verification of the seller's information, receiving, by the second terminal, the second token from the server.

12. The method of claim 1, wherein the performing of the payment routine for the product comprises:
receiving, by the second terminal, a third token issued by a credit card server from the server; and
transmitting, by the second terminal, the third token and payment information to a payment gateway (PG) or a value-added network (VAN) server.

13. A computing device, comprising:
one or more processors;
a memory configured to load a computer program executed by the processor; and
a storage configured to store the computer program,
wherein the computer program comprises instructions for performing operations of:
receiving information of a seller that is selling a product from a first terminal;
requesting verification of the seller's information from a server;
in response to successful verification of the seller's information, acquiring a transaction identifier for the product from the server;
measuring a distance from the first terminal;
creating transaction data including the measured distance and the transaction identifier;
requesting verification of the transaction data from the server; and
in response to receiving a message indicating successful verification of the transaction data from the server, performing a payment routine for the product.
